# EUROPEAN PATENT APPLICATION

(11) **EP 3 002 624 A1**
(43) Date of publication of application: **06.04.2016**
(21) Application number: 15187078.9
(22) Date of filing: 28.09.2015
(51) Int. Cl.: G02B 27/01, G02B 26/12, G02F 1/225, H04N 1/191

(54) **IMAGE DISPLAY APPARATUS**

(30) Priority: 30.09.2014 JP 2014202059
(71) Applicant: Seiko Epson Corporation, Shinjuku-ku Tokyo 163-0811 (JP)
(72) Inventor: Okamoto, Junichi, Nagano 392-8502 (JP)
(74) Representative: Hoffmann Eitle

(57) **Abstract**

An image display apparatus, includes: a light source unit that emits a light beam; a modulator that modulates intensity of the light beam that is emitted from the light source unit; and an optical scanner that conducts spatial scanning with the light beam that is modulated by the modulator, wherein the modulator includes a distribution unit that distributes a light beam that is incident to the modulator into a plurality of light beams, and a modulation unit that independently modulates intensity of the light beams which are distributed in the distribution unit.

## Description

### BACKGROUND

### 1. Technical Field

The present invention relates to an image display apparatus.

### 2. Related Art

As a display apparatus that allows a user to visually recognize an image by directly irradiating the retina of the pupil with a laser, a head-mounted display (HMD) or a head-up display (HUD) is known.

Typically, the display includes a light-emitting device that emits a light beam, and a scanning unit that changes the light beam path in order for the retinal of a user to be scanned with the light beam that is emitted. According to the display, the user can simultaneously visually recognize, for example, both of an outside landscape and an image that is drawn by the scanning unit.

For example, JP-T-2009-516862 discloses an image generator (head-up display) that includes a light source, a light beam coupler, a beam scanner capable of operating for scanning with a light beam in a two-dimensional pattern, and an induction substrate configured to receive the light beam that is used for scanning and to emit the light beam from an output position to a visible region. In addition, JP-T-2009-516862 discloses a configuration in which as the light source, a DPSS laser such as an acousto-optical modulator (AOM) using external modulation is employed (paragraph [0026] in JP-T-2009-516862).

In such a phase generator, there is known a method in which an image is formed by increasing the number of light beams (multi-beam) so as to realize high definition of a display image.

However, when conducting the external modulation of the plurality of light beams with the acoustic-optical modulator, it is necessary to provide a modulator for each beam, and thus complication and an increase in size of a structure are caused. In addition, high accuracy is demanded for positional alignment (alignment) between beams which are emitted from the modulator, and thus there is a problem in that a manufacturing difficulty level is high.

### SUMMARY

An advantage of some aspects of the invention is to provide an image display apparatus capable of conducting image drawing by a multi-beam with a simple configuration.

The advantage is accomplished by the following aspects of the invention.

An image display apparatus according to an aspect of the invention includes: a light source unit that emits a light beam; a modulator that modulates intensity of the light beam that is emitted from the light source unit; and an optical scanner that conducts spatial scanning with the light beam that is modulated by the modulator. The modulator includes a distribution unit that distributes a light beam that is incident to the modulator into a plurality of light beams, and a modulation unit that independently modulates intensity of the light beams which are distributed in the distribution unit.

According to this configuration, it is possible to emit a plurality of light beams (light fluxes) of which intensity is modulated with one modulator, respectively, and which are spaced away from each other at a predetermined distance. As a result, it is possible to obtain an image display apparatus capable of conducting image drawing by a multi-beam with a simple configuration. As a result, it is possible to conduct high-accuracy image display.

In the image display apparatus according to the aspect of the invention, it is preferable that the modulator includes a substrate that is constituted by a material having an electro-optical effect, and an electrode that applies a voltage to the substrate.

According to this configuration, it is possible modulate intensity of a light beam that is emitted by changing a refractive index by using an electro-optical effect and by appropriately selecting a variation in a phase of a light beam that propagates through the substrate. A variation in the refractive index due to the electro-optical effect is carried out at a higher speed in comparison to a modulator of another type, and thus it is possible to conduct high-speed modulation in comparison to direct modulation of the light source unit or the modulator of another type.

In the image display apparatus according to the aspect of the invention, it is preferable that the material having the electro-optical effect is lithium niobate.

Lithium niobate has a relatively large electro-optical coefficient, and thus it is also possible to lower a drive voltage during modulation of intensity of a light beam in the modulator, and it is possible to realize a reduction in size of the modulator.

In the image display apparatus according to the aspect of the invention, it is preferable that the modulation unit includes an optical waveguide that is formed in the substrate, the optical waveguide includes a diverging portion at which the optical waveguide are diverged into a first optical waveguide and a second optical waveguide, and a joining portion at which the first optical waveguide and the second optical waveguide are joined to each other, and a phase difference is allowed to occur between a first light beam that is guided through the first optical waveguide and a second light beam that is guided through the second optical waveguide, and then the first light beam and the second light beam are joined at the joining portion so as to modulate intensity of a light beam that is emitted from the optical waveguide with respect to a light beam that is incident to the optical waveguide.

According to this configuration, it is possible to finely modulate the intensity of the light beam that is emitted from the modulation unit by changing a voltage that is applied to an electrode.

In the image display apparatus according to the aspect of the invention, it is preferable that the light source unit includes a plurality of light sources, and the modulator is provided in a number that is equal to or greater than the number of the light sources.

According to this configuration, with respect to each of signal light beams of a plurality of colors, it is possible to independently modulate optical intensity, and it is possible to divide a light flux. According to this, even in a case of displaying a full-color image, it is possible to realize an image display apparatus capable of easily conducting image drawing by a multi-beam.

In the image display apparatus according to the aspect of the invention, it is preferable that the light source unit includes a first light source and a second light source, and the modulator further includes a multiplexing unit that multiplexes a light beam that is emitted from the first light source, and a light beam that is emitted from the second light source.

According to this configuration, it is possible to independently modulate signal light beams of a plurality of colors with a modulator in a number that is less than the number of the light sources. According to this, particularly, even in a simple configuration, it is possible to emit a plurality of light beams (light fluxes) which are spaced away from each other at a predetermined distance, and thus it is possible to conduct image drawing by a multi-beam.

In the image display apparatus according to the aspect of the invention, it is preferable that in the light source unit, the first light source and the second light source emit light beams at timings different from each other, and the modulator independently modulates intensity of the light beam that is emitted from the first light source and the light beam that is emitted from the second light source.

According to this configuration, in the modulator, it is possible to conduct intensity modulation of signal light beams of a plurality of colors in a time-division manner, and thus in one modulator, it is possible to individually modulate light beams with wavelengths different from each other. Accordingly, even when a multi-color display (for example, full-color display) is possible, it is possible to realize simplification of a structure of the modulator, and it is possible to realize a reduction in size of the image display apparatus.

It is preferable that the image display apparatus according to the aspect of the invention further includes a reflective optical unit that reflects the light beam that is used for scanning by the optical scanner, and the reflective optical unit includes a hologram diffraction grating.

According to this configuration, it is possible to adjust an emission direction of a light beam that is reflected by the reflective optical unit, or it is possible to select a wavelength of a light beam that is reflected.

### BRIEF DESCRIPTION OF THE DRAWINGS

The invention will be described with reference to the accompanying drawings, wherein like numbers reference like elements.
Fig. 1 is a view illustrating a schematic configuration of a first embodiment (head-mounted display) of an image display apparatus according to the invention.
Fig. 2 is a partially enlarge view of the image display apparatus illustrated in Fig. 1.
Fig. 3 is a schematic configuration view of a signal generation unit of the image display apparatus illustrated in Fig. 1.
Fig. 4 is a view illustrating a schematic configuration of an optical scanning unit that is included in a scanning light beam emitting unit illustrated in Fig. 1.
Fig. 5 is a view schematically illustrating an operation of the image display apparatus illustrated in Fig. 1.
Fig. 6 is a perspective view illustrating a schematic configuration of a modulator illustrated in Fig. 4.
Fig. 7 is a plan view of the modulator illustrated in Fig. 6.
Figs. 8A and 8B are views illustrating an operation of the modulator illustrated in Fig. 7.
Figs. 9A and 9B are views illustrating an effect of the image display apparatus illustrated in Fig. 1.
Fig. 10 is a view illustrating another configuration example of the modulator illustrated in Fig. 6.
Fig. 11 is a view illustrating a schematic configuration of an optical scanning unit that is included in an image display apparatus according to a second embodiment.
Fig. 12 is a plan view of a modulator illustrated in Fig. 11.
Figs. 13A and 13B are views illustrating a problem in a modulator of the related art.
Figs. 14A to 14D are plan views of a modulator that is included in an image display apparatus according to a third embodiment.
Figs. 15A and 15B are plan views of the modulator that is included in the image display apparatus according to the third embodiment.
Fig. 16 is a view illustrating a fourth embodiment (head-up display) of the image display apparatus according to the invention.

### DESCRIPTION OF EXEMPLARY EMBODIMENTS

Hereinafter, an image display apparatus according to the invention will be described in detail with reference to appropriate embodiments illustrated in the accompanying drawings.

### Image Display Apparatus

### First Embodiment

First, description will be given of a first embodiment of the image display apparatus according to the invention.

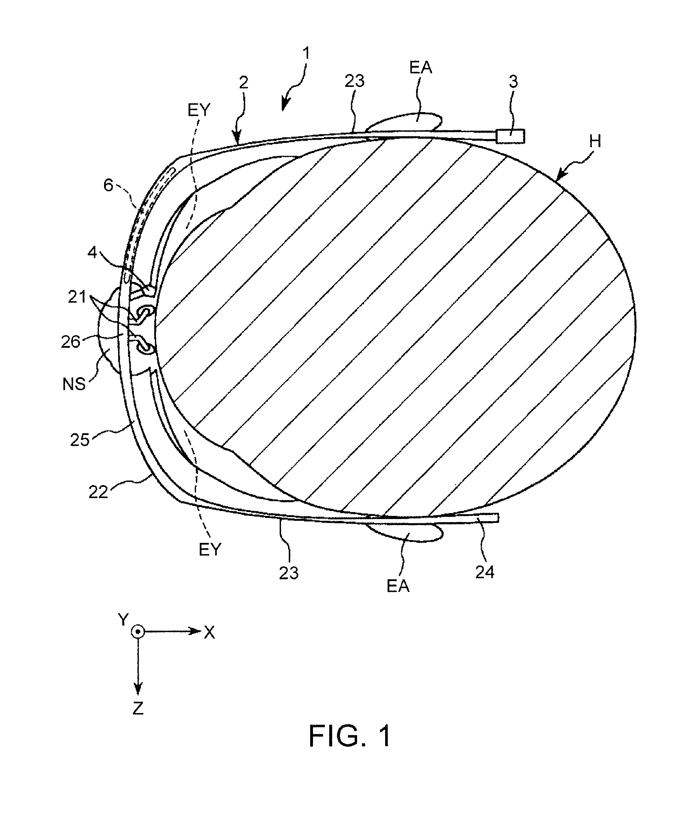

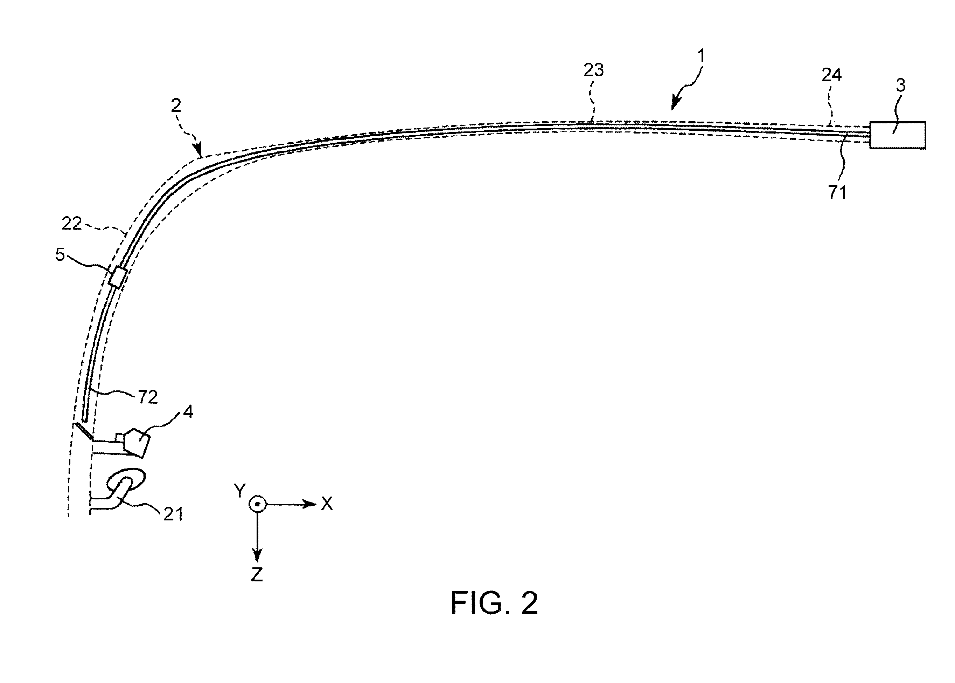

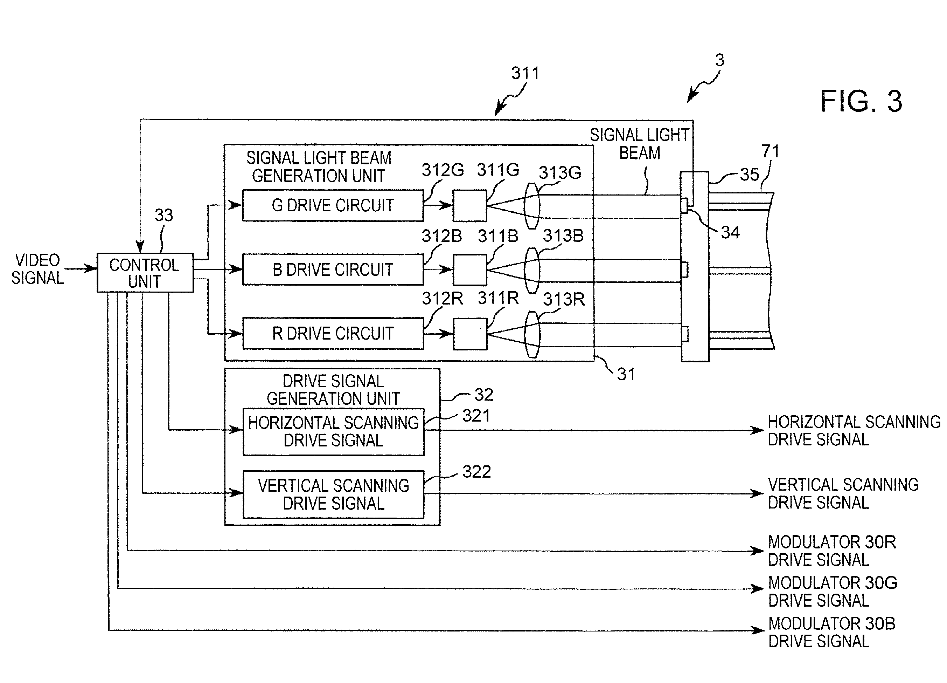

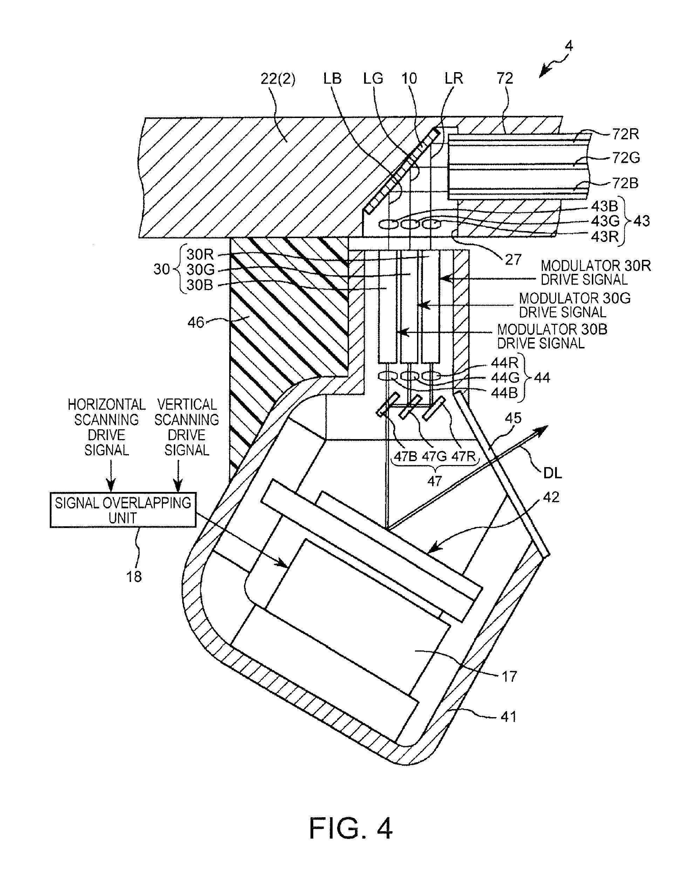

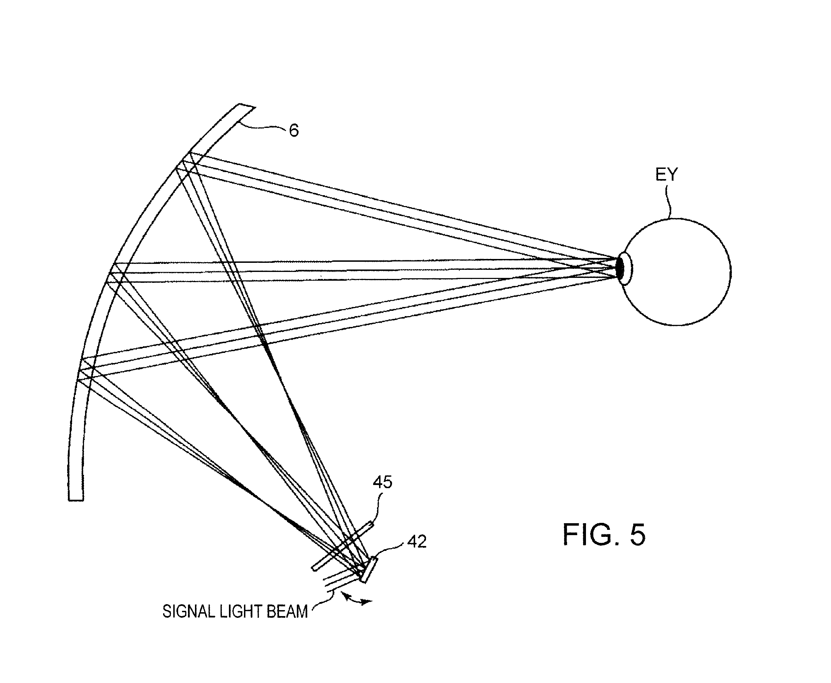

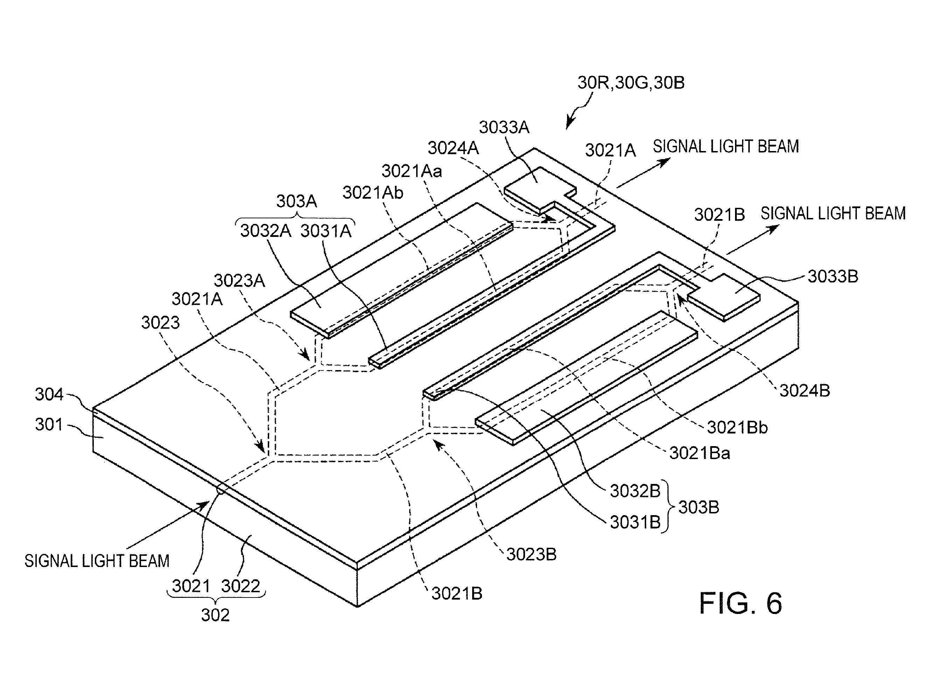

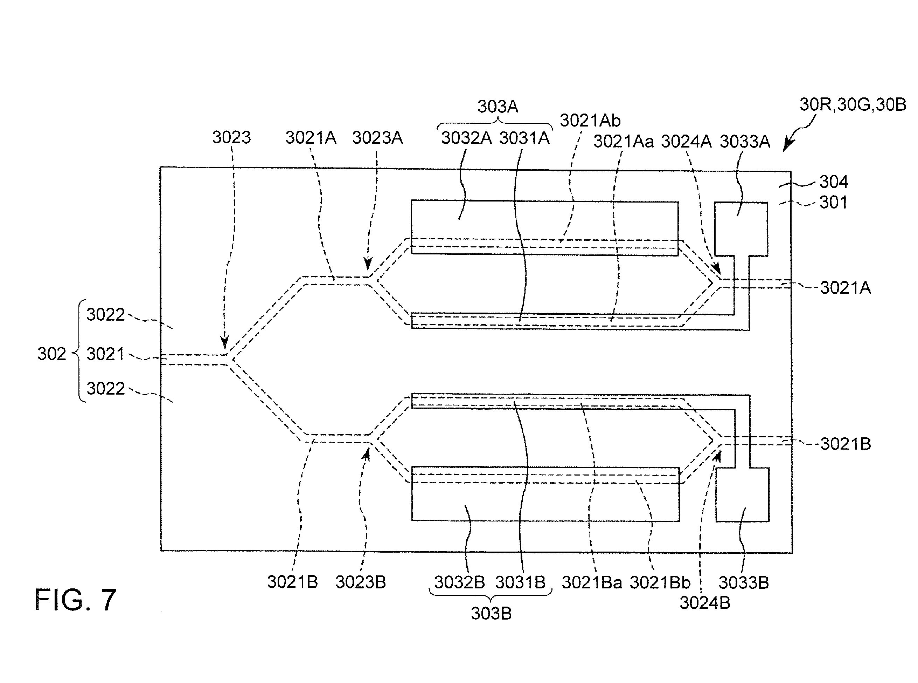

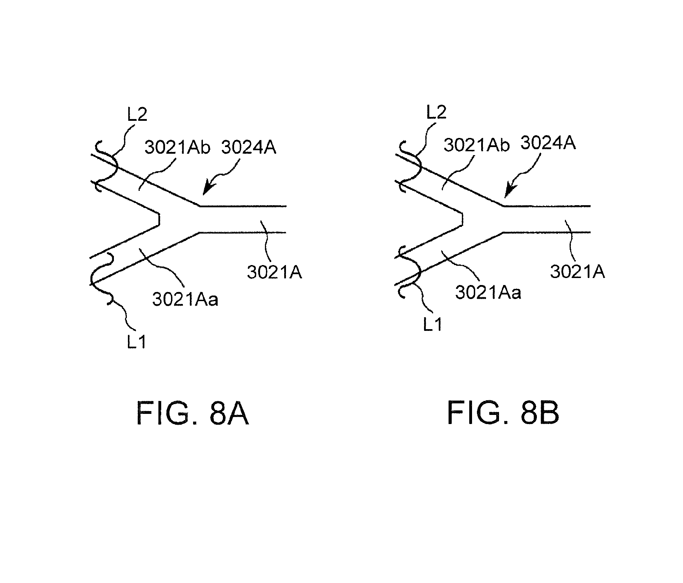

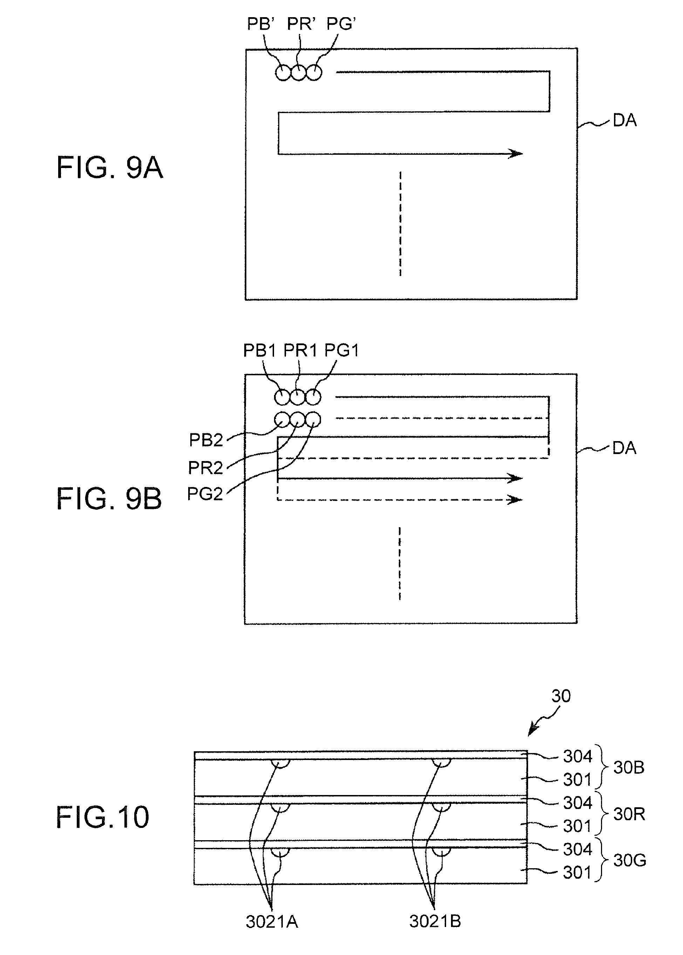

Fig. 1 is a view illustrating a schematic configuration of a first embodiment (head-mounted display) of an image display apparatus according to the invention, and Fig. 2 is a partially enlarge view of the image display apparatus illustrated in Fig. 1. In addition, Fig. 3 is a schematic configuration view of a signal generation unit of the image display apparatus illustrated in Fig. 1, Fig. 4 is a view illustrating a schematic configuration of an optical scanning unit that is included in a scanning light beam emitting unit illustrated in Fig. 1, Fig. 5 is a view schematically illustrating an operation of the image display apparatus illustrated in Fig. 1. In addition, Fig. 6 is a perspective view illustrating a schematic configuration of a modulator illustrated in Fig. 4, Fig. 7 is a plan view of the modulator illustrated in Fig. 6, and Figs. 8A and 8B are views illustrating an operation of the modulator illustrated in Fig. 7. In addition, signal light beams L1 and L2 which are illustrated in Figs. 8A and 8B schematically illustrate waveforms of signal light beams, respectively. In addition, Figs. 9A and 9B are views illustrating an effect of the image display apparatus illustrated in Fig. 1. In addition, Fig. 10 is a view illustrating another configuration example of the modulator illustrated in Fig. 6.

In addition, in Fig. 1, for convenience of explanation, an X-axis, a Y-axis, and a Z-axis are illustrated as three axes which are perpendicular to each other, and a front end side and a base end side of an arrow that is illustrated are set as "+ (positive)" and "- (negative)", respectively. A direction parallel to the X-axis is referred to as an "X-axis direction", a direction parallel to the Y-axis is referred to as a "Y-axis direction, and a direction parallel to the Z-axis is referred to as a "Z-direction".

Here, the X-axis, the Y-axis, and the Z-axis are set in such a manner that when the following image display apparatus 1 is mounted on the head H of a user, the Y-axis direction becomes an upper and lower direction of the head H, the Z-axis direction becomes a right and left direction of the head H, and the X-axis direction becomes a front and rear direction of the head H.

As illustrated in Fig. 1, the image display apparatus 1 of this embodiment is a head-mounted display (head-mounted image display apparatus) having an external appearance similar to eyeglasses. The image display apparatus 1 is used in a state of being mounted on the head H of a user, and allows a user to visually recognize an image that is a virtual image in a state in which the image overlaps with an external image.

As illustrated in Fig. 1, the image display apparatus 1 includes a frame 2, a signal generation unit 3, a scanning light beam emitting unit 4, and a reflection unit 6.

As illustrated in Fig. 2, the image display apparatus 1 includes a first optical fiber 71, a second optical fiber 72, and a connection unit 5.

In the image display apparatus 1, the signal generation unit 3 generates a signal light beam that is modulated in accordance with image information, the signal light beam is guided to the scanning light beam emitting unit 4 through the first optical fiber 71, the connection unit 5, and the second optical fiber 72, the scanning light beam emitting unit 4 conducts two-dimensional scanning with the signal light beam (video light beam) and emits the scanning light beam, and the reflection unit 6 reflects the scanning light beam toward the eye EY of a user. According to this, a virtual image in accordance with image information can be visually recognized to the user.

In this embodiment, description will be given of an example in which the signal generation unit 3, the scanning light beam emitting unit 4, the connection unit 5, the reflection unit 6, the first optical fiber 71, and the second optical fiber 72 are provided only on a right side of the frame 2, and only a virtual image for the right eye is formed. However, the left side of the frame 2 may be configured in the same manner as the right side and a virtual image for the left eye may be formed in combination with the virtual image for the right eye, or only the virtual image for the left eye may be formed.

In addition, a unit that optically connects the signal generation unit 3 and the scanning light beam emitting unit 4 may be substituted with a unit utilizing, for example, various light guide bodies in addition to the unit utilizing the optical fiber. In addition, the first optical fiber 71 and the second optical fiber 72 may not be connected through the connection unit 5, and the signal generation unit 3 and the scanning light beam emitting unit 4 may be optically connected only with the first optical fiber 71 without through the connection unit 5.

Hereinafter, respective portions of the image display apparatus 1 will be sequentially described in detail.

### Frame

As illustrated in Fig. 1, the frame 2 has a shape similar to an eyeglass frame, and has a function of supporting the signal generation unit 3 and the scanning light beam emitting unit 4.

As illustrated in Fig. 1, the frame 2 includes a front portion 22 that supports the scanning light beam emitting unit 4 and a nose pad portion 21, a pair of temple portions (hanging portion) 23 which is connected to the front portion 22 and comes into contact with the ear of the user, and a modern portion 24 that is an end opposite to the front portion 22 of each of the temple portions 23.

The nose pad portion 21 comes into contact with the nose NS of the user during use and supports the image display apparatus 1 to the head of the user. The front portion 22 includes a rim portion 25 or a bridge portion 26.

The nose pad portion 21 has a configuration capable of adjusting a position of the frame 2 with respect to the user during use.

In addition, the shape of the frame 2 is not limited to a shape illustrated as long as the frame 2 is capable of being mounted on the head H of the user.

### Signal Generation Unit

As illustrated in Fig. 1, the signal generation unit 3 is provided to the modern portion 24 (end on a side opposite to the front portion 22 of the temple portion 23) on one side (on a right side in this embodiment) of the above-described frame 2.

That is, the signal generation unit 3 is disposed on a side opposite to the eye EY on the basis of the ear EA of the user during use. According to this, it is possible to allow the image display apparatus 1 to have an excellent weight balance.

As described below, the signal generation unit 3 has both a function of generating a signal light beam that is used for scanning conducted by the optical scanning unit 42 of the following scanning light beam emitting unit 4, and a function of generating a drive signal that drives the optical scanning unit 42.

As illustrated in Fig. 3, the signal generation unit 3 includes a signal light beam generating unit 31, a drive signal generation unit 32, a control unit 33, an optical detection unit 34, and a fixing unit 35.

As described below, the signal light beam generating unit 31 generates a signal light beam that is used for scanning (optical scanning) conducted by the optical scanning unit 42 (optical scanner) of the following scanning light beam emitting unit 4.

The signal light beam generating unit 31 includes a plurality of light sources 311R, 311G, and 311B with wavelengths different from each other, a plurality of drive circuits 312R, 312G, and 312B, and lenses 313R, 313G, and 313B.

The light source 311R (R light source) emits a red light beam LR, the light source 311G (G light source) emits a green light beam LG, and the light source 311B (B light source) emits a blue light beam LB. In addition, when using the three colors of light beams, it is possible to display a full color image. In a case where a full color image is not displayed, a monochromatic light beam or two colors of light beams (one or two light sources) may be used, and four or more colors of light beams (four or more light sources) may be used to enhance color rendering properties of a full color image.

The light sources 311R, 311G, and 311B are not particularly limited, and for example, a laser diode, and an LED can be used.

The light sources 311R, 311G, and 311B are electrically connected to the drive circuits 312R, 312G, and 312B, respectively.

Hereinafter, the light sources 311R, 311G, and 311B are collectively referred to as a "light source unit 311", and a signal light beam that is generated in the signal light beam generating unit 31 is referred to as a "light beam that is emitted from the light source unit 311".

The drive circuit 312R has a function of driving the above-described light source 311R, the drive circuit 312G has a function of driving the above-described light source 311G, and the drive circuit 312B has a function of driving the above-described light source 311B.

Three (three colors of) light beams, which are emitted from the light sources 311R, 311G, and 311B which are driven by the drive circuits 312R, 312G, and 312B, respectively, are incident to the optical detection unit 34 through the lens 313R, 313G, and 313B.

Each of the lenses 313R, 313G, and 313B is a collimator lens. According to this, a light beam which is emitted to each of the light sources 311R, 311G, and 311B becomes a parallel light beam. In addition, each of the lenses 313R, 313G, and 313B may be a lens (condensing lens) having a coupling function of allowing a light beam to be incident to the first optical fiber 71.

A signal light beam, which is generated in the signal light beam generation unit 31, is incident to one end of the first optical fiber 71.

The signal light beam is transmitted through the first optical fiber 71, the connection unit 5, and the second optical fiber 72 in this order, and is transmitted to the optical scanning unit 42 of the scanning light beam emitting unit 4 to be described later.

The drive signal generation unit 32 generates a drive signal that drives the optical scanning unit 42 (optical scanner) of the scanning light beam emitting unit 4 to be described later.

The drive signal generation unit 32 includes a drive circuit 321 that generates a drive signal that is used for horizontal scanning by the optical scanning unit 42, and a drive circuit 322 that generates a drive signal that is used for vertical scanning by the optical scanning unit 42.

The drive signal generation unit 32 is electrically connected to the optical scanning unit 42 of the following scanning light beam emitting unit 4 through a signal line (not illustrated). According to this, a drive signal that is generated in the drive signal generation unit 32 is input to the optical scanning unit 42 of the following scanning light beam emitting unit 4.

The above-described drive circuits 312R, 312G, and 312B of the signal light beam generation unit 31, and the drive circuits 321 and 322 of the drive signal generation unit 32 are electrically connected to the control unit 33.

The control unit 33 has a function of controlling the operation of the drive circuits 312R, 312G, and 312B of the signal light beam generation unit 31, and the drive circuits 321 and 322 of the drive signal generation unit 32 on the basis of a video signal (image signal). That is, the control unit 33 has a function of controlling the operation of the scanning light beam emitting unit 4. According to this, the signal light beam generation unit 31 generates a signal light beam that is modulated in accordance with image information, and the drive signal generation unit 32 generates a drive signal in accordance with image information.

In addition, the control unit 33 is electrically connected to the following modulators 30R, 30G, and 30B through a signal line (not illustrated). According to this, a modulator 30R drive signal, a modulator 30G drive signal, and a modulator 30B drive signal, which are generated by the control unit 33, are input to the following modulators 30R, 30G, and 30B. Accordingly, the control unit 33 can drive the modulators 30R, 30G, and 30B in an individual manner or in cooperation with each other, and thus mutual synchronization between the modulators 30R, 30G, and 30B, and high-speed modulation are possible, and thus it is possible to display an image with a high quality through projection of the red light beam LR, the green light beam LG, and the blue light beam LB.

In addition, the control unit 33 is configured to control the operation of the drive circuits 312R, 312G, and 312B of the signal light beam generation unit 31 on the basis of intensity of a light beam which is detected by the optical detection unit 34.

### Optical Detection Unit and Fixing Unit

The fixing unit 35 has a function of fixing the first optical fiber 71 and the optical detection unit 34. In the optical detection unit 34, an amount of the remaining light beams, which are not incident to the first optical fiber 71, among light beams (signal light beams) which are emitted from the light source unit 311 is detected, and the amount of light beam is fed back to the control unit 33, thereby adjusting intensity of light beams which are emitted from the light sources 311B, 311G, and 311R.

In addition, as described above, the first optical fiber 71 is optically connected to the second optical fiber 72 at the connection unit 5.

As illustrated in Fig. 3, each of the first optical fiber 71 and the second optical fiber 72 is constituted by multi-core optical fiber (in this embodiment, three cores) so as to independently transmit a signal light beam of each color (in this embodiment, each of the red light beam LR, the green light beam LG, and the blue light beam LB). In addition, the first optical fiber 71 and the second optical fiber 72 may be configured by binding a plurality of single-core optical fibers.

In addition, it is not necessary to provide the fixing unit 35, and it is also possible to employ a configuration in which a light beam emitted from the light source unit 311 is coupled to the first optical fiber 71 without intentional optical attenuation. It is not necessary to provide the optical detection unit 34 at the position of the fixing unit 35, and the position of the optical detection unit 34 is not particularly limited as long as the amount of light beams of the light source unit 311 can be detected at the position.

### Scanning Light Beam Emitting Unit

As illustrated in Figs. 1 and 2, the scanning light beam emitting unit 4 is attached to the vicinity of the bridge portion 26 (in other words, the vicinity of the center of the front portion 22) of the frame 2.

As illustrated in Fig. 4, the scanning light beam emitting unit 4 includes a housing 41 (casing), an optical scanning unit 42, a lens 43, the modulator 30, a lens 44, a light synthesizing unit 47, a lens 45, and a support member 46.

The housing 41 is mounted to the front portion 22 through the support member 46.

In addition, an external surface of the housing 41 is joined to a portion of the support member 46 on a side opposite to the frame 2.

The housing 41 supports the optical scanning unit 42 and accommodates the optical scanning unit 42 therein. In addition, the lens 45 is mounted to the housing 41, and the lens 45 constitutes a part of (a part of a wall portion) of the housing 41.

The reflection unit 10 has a function of reflecting a signal light beam, which is emitted from the second optical fiber 72, toward the optical scanning unit 42. In addition, the reflection unit 10 is provided in a concave portion 27 that is opened on an inner side of the front portion 22. In addition, an opening of the concave portion 27 may be covered with a window portion formed from a transparent material. In addition, the reflection unit 10 is not particularly limited as long as the reflection unit 10 is capable of reflecting a signal light beam, and may be constituted by, for example, a mirror, a prism, and the like.

The lens 43 is provided between the reflection unit 10 and the following modulator 30. Specifically, the lens 43R is provided on an optical path that connects a core 72R, which emits the red light beam LR, in the second optical fiber 72, and the modulator 30R. Similarly, the lens 43G is provided on an optical path that connects a core 72G, which emits the green light beam LG, in the second optical fiber 72, and the modulator 30G, and the lens 43B is provided on an optical path that connects a core 72B, which emits the blue light beam LB, in the second optical fiber 72, and the modulator 30B.

The lens 43 has a function (coupling function) of adjusting a spot diameter of a signal light beam that is emitted from the second optical fiber 72, and allowing the signal light beam to be incident to the modulator 30.

The signal light beam that is transmitted through the lens 43 is incident to the lens 44 through the following modulator 30.

The lens 44 is provided between the modulator 30 and the light synthesizing unit 47. Specifically, a lens 44R is provided on an optical path that connects the modulator 30R and a dichroic mirror 47R of the following light synthesizing unit 47. Similarly, a lens 44G is provided on an optical path that connects the modulator 30G and a dichroic mirror 47G, and a lens 44B is provided on an optical path that connects the modulator 30B and the dichroic mirror 47B.

The lens 44 has a function (collimator function) of collimating a light beam that is emitted from the modulator 30.

The signal light beam that is transmitted through the lens 44 is incident to the following light synthesizing unit 47. In the light synthesizing unit 47, the red light beam LR, the green light beam LG, and the blue light beam LB are synthesized (multiplexed) and are emitted toward the optical scanning unit 42 as a signal light beam.

The optical scanning unit 42 is an optical scanner that conducts two-dimensional scanning with a signal light beam that is transmitted from the signal light beam generation unit 31. When scanning with the signal light beam is conducted by the optical scanning unit 42, a scanning light beam is formed. Specifically, the signal light beam is incident to the optical reflective surface of the optical scanning unit 42, and the optical scanning unit 42 is driven in accordance with a drive signal that is generated in the drive signal generation unit 32, thereby two-dimensional scanning with the signal light beam is conducted.

In addition, the optical scanning unit 42 includes a coil 17 and a signal overlapping unit 18 (refer to Fig. 4), and the coil 17, the signal overlapping unit 18, and the drive signal generation unit 32 constitute a drive unit that drives the optical scanning unit 42.

The signal light beam (scanning light beam) that is used for scanning by the optical scanning unit 42 is emitted to an outer side of the housing 41 through the lens 45.

In addition, the scanning light beam emitting unit 4 may be provided with a plurality of optical scanning units for one-dimensional scanning with a signal light beam instead of the optical scanning unit 42 for two-dimensional scanning with the signal light beam.

In addition, the lenses 43, 44, and 45 may be provided as necessary, or may be omitted or substituted with other optical elements. In addition, disposition of the lenses is not limited to above-described position, and the lenses may be provided between the second optical fiber 72 and the reflection unit 10, or between the light synthesizing unit 47 and the optical scanning unit 42.

In addition, the lenses 43 and 44 may be constituted by an assembly of a plurality of lenses as illustrated in Fig. 4, and may be constituted by a component (lens array) obtained by coupling lenses.

### Modulator

As described above, the signal light beam emitted from the second optical fiber 72 is incident to the modulator 30 that is provided between the reflection unit 10 and the optical scanning unit 42.

The modulator 30 includes the modulator 30R to which the red light beam LR is incident, the modulator 30G to which the green light beam LG is incident, and the modulator 30B to which the blue light beam LB is incident.

Each of the modulators 30R, 30G, and 30B which are illustrated in Fig. 6 includes a substrate 301, an optical waveguide 302 that is formed in the substrate 301, electrodes 303A and 303B which are provided on the substrate 301, and a buffer layer 304 that is interposed between the substrate 301 and the electrodes 303A and 303B.

The substrate 301 has a rectangular flat sheet shape in a plan view, and is constituted by a material having an electro-optical effect. The electro-optical effect is a phenomenon in which a refractive index of a material varies when an electric field is applied to the material, and examples of the electro-optical effect include a Pockels effect in which the refractive index is proportional to the electric field, and a Kerr effect in which the refractive index is proportional to the square of the electric field. When the optical waveguide 302 that is diverged partway along the substrate 301 is formed in the substrate 301, and an electric field is applied to one side of the optical waveguide 302 that is diverged, it is possible to change the refractive index. When using this phenomenon, if a phase difference is applied to a light beam that propagates through the optical waveguide 302 that is diverged, and light beams which are diverged are joined again, it is possible to conduct intensity modulation on the basis of the phase difference.

Examples of the material having the electro-optical effect include inorganic materials such as lithium niobate (LiNbO₃), lithium tantalate (LiTaO₃), lead lanthanum zirconate titanate (PLZT), and potassium titanate phosphate (KTiOPO₄), polythiophene, a liquid crystal material, organic materials such as a material in which an electro-optically active polymer is doped with a charge transport molecule, a material in which a charge transporting polymer is doped with an electro-optical pigment, a material in which an inactive polymer is doped with a charge transport molecule and an electro-optical pigment, a material including a charge transport portion and an electro-optical portion at a main chain or a side chain of a polymer, and a material doped with tricyanofurane (TCF) as an acceptor, and the like.

Among these, particularly, lithium niobate is preferably used. Lithium niobate has a relatively large electro-optical coefficient, and thus during modulation of the intensity of light beams in the modulators 30R, 30G, and 30B, it is possible to lower a drive voltage, and it is possible to realize a reduction in size of the modulators 30R, 30G, and 30B.

It is preferable that the materials are used as a single crystal or a solid-solution crystal. According to this, a light-transmitting property is given to the substrate 301, and thus it is possible to form the optical waveguide 302 in the substrate 301.

The optical waveguide 302 may be a member (optical fiber formed from glass or a resin, an optical waveguide, and the like) separate from the substrate 301, and in this embodiment, the optical waveguide 302 is a light guiding path that is formed in the substrate 301. Examples of a method of forming the optical waveguide 302 in the substrate 301 include a proton exchange method, a Ti diffusion method, and the like. Among these methods, the proton exchange method is a method in which a substrate is immersed in an acid solution, protons are intruded into the substrate through elution and exchange of ions in the substrate, thereby changing a refractive index of a region into which the protons are intruded. According to this method, particularly, an optical waveguide 302, which is particularly excellent in light resistance, is obtained. On the other hand, the Ti diffusion method is a method in which after Ti is formed on the substrate, and a heating treatment is carried out to diffuse Ti into the substrate, thereby changing a refractive index of a region into which Ti is diffused.

The optical waveguide 302, which is formed as described above, includes a core portion 3021 that is constituted by an elongated portion having a relatively high refractive index in the substrate 301, and a clad portion 3022 that is adjacent to the core portion 3021 and has a relative low refractive index.

In addition, the core portion 3021 is diverged into two portions including a core portion 3021A and a core portion 3021B at a diverging portion 3023 that is located on an incident end side of the optical waveguide 302. The core portion 3021 is formed in such a manner that an end thereof is exposed to one short side of the substrate 301, and the core portion 3021A and the core portion 3021B are formed in such a manner that an end thereof is exposed to the other short side of the substrate 301. The end of the core portion 3021 becomes an incident end of light beam, and the ends of the core portion 3021A and the core portion 3021B becomes an emission end of a light beam.

In the core portions, the core portion 3021A is further diverged into two portions including a first core portion (first optical waveguide) 3021Aa and a second core portion (second optical waveguide) 3021Ab at the diverging portion 3023A. That is, the core portion 3021A includes a distribution portion at which the core portion 3021A is distributed into two portions. In addition, the first core portion 3021Aa and the second core portion 3021Ab are joined as one core portion 3021A at a joining portion 3024A that is located on an emission end side. A light beam can be emitted from the emission end of the core portion 3021A.

On the other hand, the core portion 3021B is further diverged into two portions including a first core portion (first optical waveguide) 3021Ba and a second core portion (second optical waveguide) 3021Bb at the diverging portion 3023B. That is, the core portion 3021B includes a distribution portion at which the core portion 3021B is distributed into two portions. In addition, the first core portion 3021Ba and the second core portion 3021Bb are joined as one core portion 3021B at a joining portion 3024B that is located on an emission end side. A light beam can be emitted from the emission end of the core portion 3021B.

In this manner, the emission end of the core portion 3021A and the emission end of the core portion 3021B are spaced away from each other with a predetermined distance. Accordingly, a light beam that is incident from the incident end of the core portion 3021 is subjected to divergence or joining and is finally emitted in a state of being diverged into two parts.

The electrode 303A is constituted by a signal electrode 3031A and a ground electrode 3032A.

In the electrodes, the signal electrode 3031A is disposed to overlap with the first core portion 3021Aa in a plan view of the substrate 301. On the other hand, the ground electrode 3032A is disposed to overlap with the second core portion 3021Ab in a plan view of the substrate 301.

The electrode 303B is constituted by a signal electrode 3031B and a ground electrode 3032B.

In the electrodes, the signal electrode 3031B is disposed to overlap with the first core portion 3021Ba in a plan view of the substrate 301. On the other hand, the ground electrode 3032B is disposed to overlap with the second core portion 3021Bb in a plan view of the substrate 301.

The ground electrode 3032A and the ground electrode 3032B are electrically grounded, respectively. On the other hand, a potential based on an electrical signal is applied to the signal electrode 3031A in order for a potential difference to occur between the signal electrode 3031A and the ground electrode 3032A. Similarly, a potential based on an electrical signal is applied to the signal electrode 3031B in order for a potential difference to occur between the signal electrode 3031B and the ground electrode 3032B. In this manner, when a potential difference (voltage) occurs between the signal electrodes 3031A and 3031B, and the ground electrodes 3032A and 3032B, an electric field operates on the core portion 3021 through which lines of electric force which occur between the signal electrodes 3031A and 3031B and the ground electrodes 3032A and 3032B. As a result, a refractive index of each of the first core portion 3021Aa and the first core portion 3021Ba varies on the basis of the electro-optical effect.

Here, the signal electrode 3031A has a width narrower than that of the ground electrode 3032A. According to this, the lines of electric force concentrate to the first core portion 3021Aa that is located immediately below the signal electrode 3031A. That is, a relatively strong electric field is applied to the first core portion 3021Aa from the signal electrode 3031A. On the other hand, the width of the ground electrode 3032A is set to be sufficiently broader than that of the second core portion 3021Ab. According to this, the lines of electric force does not concentrate so much to the second core portion 3021Ab that is located immediately below the ground electrode 3032A. That is, only a relatively weak electric field operates on the second core portion 3021Ab from the ground electrode 3032A.

In addition, one end of the signal electrode 3031A is connected to an electrode pad 3033A. A potential can be applied to the signal electrode 3031A through the electrode pad 3033A.

The first core portion 3021Aa and the second core portion 3021Ab are different from each other as described above, and thus when the above-described potential difference occurs with respect to the electrode 303A, the refractive index of the first core portion 3021Aa that is located in correspondence with the signal electrode 3031A mainly varies, and the refractive index of the second core portion 3021Ab hardly varies. As a result, a deviation in the refractive index occurs between the first core portion 3021Aa and the second core portion 3021Ab, and thus a phase difference based on the deviation in the refractive index occurs between a light beam propagating through the first core portion 3021Aa and a light beam propagating through the second core portion 3021Ab. When the two signal light beams, between which the phase difference occurs as described above, are joined at the joining portion 3024A, a multiplexed light beam that is attenuated from incident intensity is generated. The multiplexed light beam is emitted from the emission end of the core portion 3021A toward the light synthesizing unit 47.

At this time, when adjusting the potential difference that occurs between the signal electrode 3031A and the ground electrode 3032A, it is possible to control a phase difference between the signal light beam (first light beam) L1 that propagates through the first core portion 3021Aa, and a signal light beam (second light beam) L2 that propagates through the second core portion 3021Ab, and thus it is possible to control an attenuation width from the incident intensity in the multiplexed light beam. That is, the core portion 3021A and the electrode 303A that allows an electric field to operate on the core portion 3021A function as a modulation unit capable of finely modulating the intensity of the light beam that is emitted from the core portion 3021A.

For example, when the potential difference that occurs between the signal electrode 3031A and the ground electrode 3032A is adjusted, thereby retarding the phase difference between the signal light beam L1 that propagates through the first core portion 3021Aa and the signal light L2 that propagates through the second core portion 3021Ab by a half-wavelength at the joining portion 3024A as illustrated in Fig. 8A, the signal light beam L1 and the signal light beam L2 collide with each other at the joining portion 3024A and disappears, and thus optical strength becomes substantially zero. In addition, when appropriately changing an amount of deviation between the phase of the signal light beam L1 and the phase of the signal light beam L2, it is possible to modulate the optical intensity of the multiplexed light beam.

On the other hand, as illustrated in Fig. 8B, when the phase of the signal light beam L1 and the phase of the signal light beam L2 are the same as each other at the joining portion 3024A, the signal light beam L1 and the signal light beam L2 mutually intensify the intensity at the joining portion 3024A. Accordingly, a multiplexed light beam having approximately the same optical intensity as that of the incident intensity is obtained.

The signal electrode 3031B has a width that is narrower than that of the ground electrode 3032B. According to this, the lines of electric force concentrate to the first core portion 3021Ba that is located immediately below the signal electrode 3031B. That is, a relatively strong electric field operates on the first core portion 3021Ba from the signal electrode 3031B. On the other hand, the width of the ground electrode 3032B is set to be sufficiently broader than that of the second core portion 3021Bb. According to this, the lines of electric force does not concentrate so much to the second core portion 3021Bb that is located immediately below the ground electrode 3032B. That is, only a relatively weak electric field operates on the second core portion 3021Bb from the ground electrode 3032B.

Similarly, the first core portion 3021Ba and the second core portion 3021Bb are different from each other as described above, and thus when the above-described potential difference (voltage) occurs with respect to the electrode 303B, the refractive index of the first core portion 3021Ba that is located in correspondence with the signal electrode 3031B mainly varies, and the refractive index of the second core portion 3021Bb hardly varies. As a result, a deviation in the refractive index occurs between the first core portion 3021Ba and the second core portion 3021Bb, and thus a phase difference based on the deviation in the refractive index occurs between a light beam propagating through the first core portion 3021Ba and a light beam propagating through the second core portion 3021Bb. When the two signal light beams, between which the phase difference occurs as described above, are joined at the joining portion 3024B, a multiplexed light beam that is attenuated from incident intensity is generated. The multiplexed light beam is emitted from the emission end of the core portion 3021B toward the light synthesizing unit 47.

When adjusting the potential difference that occurs between the signal electrode 3031B and the ground electrode 3032B, it is possible to control a phase difference between the signal light beam (first light beam) L1 that propagates through the first core portion 3021Ba, and a signal light beam (second light beam) L2 that propagates through the second core portion 3021Bb, and thus it is possible to control an attenuation width from the incident intensity in the multiplexed light beam. That is, the core portion 3021B and the electrode 303B that allows an electric field to operate on the core portion 3021B function as a modulation unit that modulates the intensity of the light beam that is emitted from the core portion 3021B.

When the potential difference that occurs between the signal electrode 3031B and the ground electrode 3032B is adjusted, whereby a phase difference between the signal light beam that propagates through the first core portion 3021Ba and the signal light beam that propagates through the second core portion 3021Bb deviates by a half-wavelength at the joining portion 3024B, the two signal light beams collide with each other at the joining portion 3024B and disappear, and thus optical strength becomes substantially zero. In addition, when appropriately changing an amount of deviation between the phases of the two signal light beams, it is possible to modulate the optical strength of the multiplexed light beam.

On the other hand, when the phase of the signal light beam L1 and the phase of the signal light beam L2 are the same as each other at the joining portion 3024B, the two signal light beams mutually intensify the intensity at the joining portion 3024B. Accordingly, a multiplexed light beam having approximately the same optical intensity as that of the incident intensity is obtained.

In addition, according to the image display apparatus 1, it is possible to conduct external modulation of the intensity of each of the three colors of signal light beams in the modulators 30R, 30G, and 30B. That is, the modulators 30R, 30G, and 30B have a function of conducting external modulation of the intensity of the signal light beam. According to this, it is possible to realize high-speed modulation in comparison to a case where the intensity of the three colors of signal light beams emitted from the light source unit 311 is directly modulated in the light source unit 311.

In addition, in the image display apparatus 1, it is not necessary to directly modulate the light source unit 311, and thus the light source unit 311 may be driven in order for a signal light beam with constant intensity to be emitted. Accordingly, it is possible to drive the light source unit 311 under conditions in which light-emitting efficiency is the highest, or under conditions in which light-emitting stability or wavelength stability is the highest. As a result, it is possible to realize low power consumption of the image display apparatus 1, or operation stability thereof. Further, it is possible to realize a high quality of an image that is drawn on the retina of the eye EY. In addition, a drive circuit necessary for direct modulation of the light source unit 311 is not necessary, and a circuit configured to continuously drive the light source unit 311 is relatively simple and inexpensive, and thus it is possible to realize a reduction in the cost for the light source unit 311 and a reduction in size of the light source unit 311.

In addition, in a case of using the following hologram diffraction grating as the reflection unit 6, it is possible to increase the wavelength stability of the signal light beam, and thus it is possible to allow a signal light beam close to a designed wavelength to be incident to the hologram diffraction grating. As a result, it is possible to make a deviation from a designed value of a diffraction angle small in the hologram diffraction grating, and thus it is possible to suppress haziness of an image.

In addition, in this embodiment, in the optical waveguide 302, a portion corresponding to the diverging portions 3023, 3023A, or 3023B (distribution portion), and a portion (portion in which the electrode 303A or 303B is provided) corresponding to the modulation unit are formed on the same substrate 301. According to this, it is possible to realize a reduction in size of the modulators 30R, 30G, and 30B in comparison to a case where these units are configured as an independent member. As a result, it is possible to realize a reduction in size of the image display apparatus 1. In addition, it is possible to reduce an optical coupling loss between the portion corresponding to the distribution portion and the portion corresponding to the modulation unit, and thus it is possible to suppress attenuation of the signal light beam in the modulators 30R, 30G, and 30B. According to this, it is possible to realize a high quality of an image that is drawn on the retina of the eye EY.

In addition, it is possible to collectively form the modulation units, which conduct distribution into a plurality of light fluxes by using the optical waveguide, and independently drive the distributed light fluxes, on the basis of patterning accuracy, and thus it is possible to guide the light fluxes to a minute region with high accuracy by using a single light source.

In addition, with regard to the function of the modulators 30R, 30G, and 30B, that is, the function of the modulation unit, the optical waveguide 302 may be positioned at portions corresponding to at least the electrodes 303A and 303B. However, when the optical waveguide 302 extends to portions other than portions corresponding to the electrodes 303A and 303B, that is, portions corresponding to the diverging portions 3023, 3023A, and 3023B, or the joining portions 3024A and 3024B, for example, there is obtained an additional effect of enhancing a beam quality of the signal light beam, and of reducing an excessive signal light beam. According to this, it is possible to further realize an additional high quality of an image that is displayed.

In the additional effects, the former effect is obtained through trimming (cut-out of an unnecessary portion) of a signal light beam. That is, in a signal light beam that is emitted from the light source unit 311, a quality of the central portion on a transverse cross-sectional surface is typically high (a wavelength distribution width is narrow), and a quality in the peripheral portion is low. Accordingly, when the modulators 30R, 30G, and 30B include the optical waveguide 302, it is possible to trim the peripheral portion of a beam at the optical waveguide 302. As a result, it is possible to emit the beam toward the optical scanning unit 42 after modulating the central portion of the beam with a high quality.

On the other hand, in the additional effects, the later effect is obtained in accordance with a reduction in an amount of a signal light beam by using a phenomenon in which a part of signal light beams is leaked when the light beam propagates through the optical waveguide 302.

In addition, since a voltage is applied to a region with a narrow cross-section similar to the optical waveguide 302, it is possible to make an application voltage, which is necessary for a variation in the refractive index in order for a phase difference necessary for modulation of a signal light beam to occur, smaller in comparison to a case where a voltage is applied to a bulk electro-optical material. In addition, when a cross-sectional area of the optical waveguide 302 (core portion 3021) is appropriately selected, it is possible to enhance controllability of intensity modulation.

In addition, the shape of the electrodes 303A and 303B is not limited to the shape that is illustrated in the drawings, and may be a shape that is disposed in correspondence with positions which do not overlap with the first core portions 3021Aa and 3021Ba or the second core portions 3021Ab and 3021Bb, for example, along a direction of a crystal axis of the substrate 301.

In addition, the above-described modulators 30R, 30G, and 30B conduct the external modulation of the intensity of the signal light beam by using the electro-optical effect, but it is possible to use an optical modulation effect such as an acousto-optical effect, a magneto-optical effect, a thermo-optical effect, and a non-linear optical effect instead of the electro-optical effect. With regard to the various effects, it is possible to obtain the same operation and effects as described above.

In addition, in a case of using the electro-optical effect, particularly, modulation can be conducted at a high speed, and thus there is a great contribution to a high quality of an image that is displayed.

In addition, a modulation principle in the modulators 30R, 30G, and 30B is not limited to the above-described Mach-Zehnder type modulation principle. Examples of a substitutable modulation structure include a directional coupling type modulator, a diverged interference type modulator, a ring interference type modulator, an internal propagating type optical switch using a Y-cut cross waveguide, a diverged switch, a cut-out type optical modulator, a balance bridge type optical modulator, a Bragg diffraction type optical switch, an electrical absorption type (EA) modulator, and the like.

In addition, the Mach-Zehnder type modulation structure can be realized with a relatively simple structure, and a modulation width can be easily adjusted in an arbitrary manner, and thus the Mach-Zehnder type modulation structure is useful as a modulation structure in the modulators 30R, 30G, and 30B. When the modulation width is adjusted in an arbitrary manner, the intensity of the signal light beam can be adjusted in an arbitrary manner, and thus, for example, it is possible to realize high contrast of a display image.

In addition, the buffer layer 304 is provided between the substrate 301 and the electrodes 303Aand 303B. For example, the buffer layer 304 is constituted by a medium such as silicon oxide and alumina in which absorption of a light beam that is guided through the optical waveguide 302 is small.

Here, the image display apparatus 1 scans the retina of the eye EY of the user with the signal light beam, thereby drawing an image. For example, in a case of image drawing by one light flux, vertical definition is determined by the number of vibrations in one frame of the following optical scanning unit 42, and horizontal definition is determined by a flickering speed of the signal light beam. There is a limit to increase the number of vibrations of the optical scanning unit 42 which determines the vertical definition from the viewpoints of drive power of a mirror, power consumption, noise generation in an audible sound region, and the like.

In contrast, as described above, an emission end of the core portion 3021A and an emission end of the core portion 3021B are spaced away from each other with a predetermined distance. According to this, a signal light beam that is emitted from the core portion 3021A and a signal light beam that is emitted from the core portion 3021B are emitted with a predetermined distance therebetween. That is, a signal light beam that is incident to the modulator 30R, 30G, or 30B is divided into two light fluxes (light beams).

In addition, each of the modulators 30R, 30G, and 30B can individually modulate optical intensity of two light fluxes. According to this, the two light fluxes emitted from the modulator 30R, 30G, or 30B are used to draw dot images different from each other, and it is possible to independently adjust intensity (brightness) of the respective dot images.

Here, when the signal light beam is divided into two light fluxes as described above, it is possible to conduct scanning with the two different light fluxes, of which intensity is capable of being independently modulated, by using the optical scanning unit 42, and thus one image is formed on the basis of the two dot images which are formed by the two light fluxes. Accordingly, it is possible to obtain an image display apparatus 1 capable of displaying an image with definition two times definition in a case where an image is drawn by one light flux.

Figs. 9A and 9B illustrate a process of drawing an image with one light flux, and a process of drawing an image with two light fluxes.

Fig. 9A is a view illustrating a process of drawing an image with one light flux. Fig. 9A illustrates an aspect in which a dot image PR' of a red light beam, a dot image PG' of a green light beam, and a dot image PB' of a blue light beam are projected to an image drawing region DA. In addition, an example of a scanning trajectory of the dot images PR', PG', and PB' is indicated by a solid-line arrow. In this manner, when the dot images PR', PG', and PB' are scanned in the horizontal direction (right and left direction in Figs. 9A and 9B) and the vertical direction (upper and lower direction in Figs. 9A and 9B), it is possible to draw an arbitrary two-dimensional image.

On the other hand, Fig. 9B is a view illustrating a process of drawing an image with two light fluxes. Fig. 9B illustrates an aspect in which dot images PR1 and PR2 of the red light beam, dot images PG1 and PG2 of the green light beam, and dot images PB1 and PB2 of the blue light beam are projected to the image drawing region DA in a pair in a state of being arranged in the vertical direction (upper and lower direction in Figs. 9A and 9B). Among the dot images, the dot image PR1 is obtained by projecting a light flux emitted from the core portion 3021A of the modulator 30R, the dot image PG1 is obtained by projecting a light flux emitted from the core portion 3021A of the modulator 30G, and the dot image PB1 is obtained by projecting a light flux emitted from the core portion 3021A of the modulator 30G. In addition, the dot image PR2 is obtained by projecting a light flux emitted from the core portion 3021B of the modulator 30R, the dot image PG2 is obtained by projecting a light flux emitted from the core portion 3021B of the modulator 30G, and the dot image PB2 is obtained by projecting a light flux emitted from the core portion 3021B of the modulator 30B.

In addition, in Fig. 9B, an example of a scanning trajectory of a group of dot images PR1, PG1, and PB1 is indicated by a solid-line arrow, and an example of a scanning trajectory of a group of dot images PR2, PG2, and PB2 is indicated by a broken-line arrow.

In addition, in Fig. 9B, the dot image PR1 of the red light beam, the dot image PG1 of the green light beam, and the dot image PB1 of the blue light beam are illustrated to deviate from each other for convenience of explanation, but it is preferable that these dot images are projected at the same position. Similarly, in Fig. 9B, the dot image PR2 of the red light beam, the dot image PG2 of the green light beam, and the dot image PB2 of the blue light beam are illustrated to deviate from each other for convenience of explanation, but it is preferable that these dot images are projected at the same position.

In the image display apparatus 1, in the modulators 30R, 30G, and 30B which modulate intensity of a light beam, each signal light beam is divided into two light fluxes. However, in the modulators 30R, 30G, and 30B, after each signal light beam is divided into two light fluxes, optical intensity of the light fluxes after division can be individually modulated. According to this, even in a simple structure, it is possible to form two light fluxes of which intensity modulation can be independently conducted. Accordingly, when using two light fluxes of which intensity modulation can be independently conducted, it is possible to easily obtain the image display apparatus 1 with high definition.

In addition, when the modulators 30R, 30G, and 30B, which can generate two light fluxes with high positional accuracy and can individually modulate intensity of each of the light fluxes, are provided, in the image display apparatus 1, as illustrated in Figs. 9A and 9B, it is possible to increase definition in the vertical direction two times without increasing the number of vibrations of the optical scanning unit 42 which determines the vertical definition. According to this, it is realize high definition of an image that is displayed.

In addition, in this embodiment, so as to divide the signal light beam into two light fluxes, the diverging portion 3023 of the optical waveguide 302 is used. According to this, a distance between the light fluxes are spaced away can be strictly controlled on the basis of the design of the optical waveguide 302, and thus a deviation in the distance is suppressed and it is possible to reduce an individual difference of the image display apparatus 1. According to this, a distance between horizontal scanning lines become uniform, and thus it is possible to provide a uniform image, and it is possible to suppress an individual difference in an image quality for each image display apparatus. This is an effect that is caused by a fact that the optical waveguide 302 is typically manufactured by using a photolithography technology, and thus dimensional accuracy can be highly enhanced.

In addition, in this embodiment, two light fluxes are generated in the modulator 30, and thus it is easy to make a distance between light fluxes be sufficiently narrow (for example, approximately 100 µm or less). According to this, it is easier to enhance the definition in the vertical direction, and it is possible to make a non-drawing region narrow during drawing, and thus it is possible to display an image with higher definition.

In addition, in this embodiment, for example, it is possible to realize a reduction in size and the cost of the image display apparatus 1 in comparison to a case of generating two light fluxes by arranging two light sources.

In addition, a distance between an emission end of the core portion 3021A and an emission end of the core portion 3021B corresponds to a distance between scanning lines in a screen. Accordingly, the distance may be appropriately adjusted in accordance with an optical magnification. The distance between the scanning lines can be appropriately set in accordance with a drawing method of the screen. For example, the distance between the scanning lines may be set so that an upper half section of the drawing region is drawn by a light beam that is emitted from the core portion 3021A, and a lower half section of the drawing region is drawn by a light beam that is emitted from the core portion 3021B. In addition, the distance between the scanning lines may be set so that an odd scanning line is drawn with a light beam that is emitted from the core portion 3021A, and an even scanning line is drawn with a light beam that is emitted from the core portion 3021B.

In addition, the number of divisions of the signal light beam in the modulator 30R, 30G, and 30B is not particularly limited, and may be 3 or greater. In addition, a division pattern may be a one-dimensional pattern as illustrated, or a two-dimensional pattern. The two-dimensional pattern represents, for example, a pattern in which light fluxes are emitted to be arranged in a matrix shape, and the like when seen in a propagation direction of a light flux of the signal light beam. When employing the division pattern as described above, it is possible to lengthen time necessary for modulation for one light flux (it is possible to secure a time margin), and thus it is possible to use a relatively low-speed and low-cost circuit. As a result, it is possible to obtain the image display apparatus 1 capable of displaying an image with high definition at the low cost.

In addition, in this embodiment, the modulators 30R, 30G, and 30B are separated from each other, but the type of the modulator 30 is not limited thereto. For example, it is possible to employ a type in which the modulators 30R, 30G, and 30B are formed (mixed-in) in one substrate 301 in combination with each other. According to this modulator 30, it is possible to simultaneously manufacture the modulators 30R, 30G, and 30B in one manufacturing process during formation of the optical waveguide 302 or during formation of the respective electrodes 303A and 303B. According to this, it is possible to enhance manufacturability of the modulator 30. In addition, when the modulators 30R, 30G, and 30B are mixed-in in one substrate 301, it is possible to enhance positional accuracy between the optical waveguide 302 that is included in the modulator 30R, the optical waveguide 302 that is included in the modulator 30G, and the waveguide 302 that is included in the modulator 30B. According to this, during optical connection between the modulator 30 and the second optical fiber 72, it is possible to enhance optical coupling efficiency, and it is possible to suppress occurrence of a color deviation in an image due to a deviation of optical coupling efficiency between the red light beam LR, the green light beam LG, and the blue light beam LB.

In addition, the substrate 301 in which the modulator 30R is provided, the substrate 301 in which the modulator 30G is provided, and the substrate 301 in which the modulator 30B is provided may be stacked.

Fig. 10 illustrates another configuration example of the modulator 30 illustrated in Fig. 6. In addition, in Fig. 10, an electrode or a wiring is not illustrated.

The modulator 30 illustrated in Fig. 10 has a configuration in which the modulator 30G, the modulator 30R, and the modulator 30B which are illustrated in Fig. 6 are stacked in this order from a lower side. In addition, Fig. 10 is a front elevation view when seen in a propagation direction of a light beam that is emitted from each of the modulators 30R, 30B, and 30B.

According to the modulator 30 configured as described above, it is possible to determine mutual arrangement of the modulators 30R, 30G, and 30B with high accuracy, and it is possible to retain the mutual arrangement for a long period time. In addition, the modulators 30R, 30G, and 30B can be handled as one component, and thus there is an advantage in that assembling of the image display apparatus 1 becomes easy.

### Light Synthesizing Unit

The light synthesizing unit 47 synthesizes light beams transmitted from the plurality of modulators 30R, 30G, and 30B. According to this, it is possible to synthesize the light flux of the red light beam LR, the light flux of the green light beam LG, and the light flux of the blue light beam LB of which intensity is individually modulated. Specifically, as illustrated in Fig. 9B, it is possible to form two light fluxes DL (refer to Fig. 4) including a light flux capable of projecting a group of dot images PR1, PG1, and PB1, and a group of dot images PR2, PG2, and PB2.

The light synthesizing unit 47 according to this embodiment includes three dichroic mirrors 47R, 47G, and 47B. In addition, the light synthesizing unit 47 is not limited to a configuration using the dichroic mirror as described above, and may be constituted by a prism, an optical waveguide, optical fiber, and the like.

Hereinbefore, description has been given of the scanning light beam emitting unit 4, but the configuration of the scanning light beam emitting unit 4 is not limited to a configuration illustrated in the drawings. An arbitrary optical element may be disposed on the optical path in Fig. 4.

### Reflection Unit

As illustrated in Figs. 1 and 2, the reflection unit 6 (reflective optical unit) is mounted to the rim portion 25 that is included in the front portion 22 of the frame 2.

That is, the reflection unit 6 is disposed to be located in front of the eye EY of the user and on a side farther from the user in comparison to the optical scanning unit 42 during use. According to this, it is possible to prevent a portion, which protrudes to a front side with respect to the face of the user, from being formed in the image display apparatus 1.

As illustrated in Fig. 5, the reflection unit 6 has a function of reflecting a signal light beam transmitted from the optical scanning unit 42 toward the eye EY of the user.

In this embodiment, the reflection unit 6 is a half-mirror (semi-transparent mirror), and also has a function (light-transmitting property for a visible light beam) of transmitting an external light beam therethrough. That is, the reflection unit 6 has a function (combiner function) of reflecting a signal light beam (video light beam) that is transmitted from the optical scanning unit 42, and of transmitting an external light beam which propagates from an outer side of the reflection unit 6 toward the eye of the user during use. According to this, the user can visually recognize a virtual image (image) that is formed by the signal light beam while visually recognizing an external image. That is, it is possible to realize a see-through type head-mounted display.

In the reflection unit 6, a surface on a user side is constituted by a concave reflective surface. According to this, a signal light beam that is reflected from the reflection unit 6 is focused to a user side. Accordingly, the user can visually recognize a virtual image that is more enlarged in comparison to an image that is formed on the concave surface of the reflection unit 6. According to this, it is possible to enhance visibility of an image on a user side.

On the other hand, in the reflection unit 6, a surface on a side farther from the user is constituted by a convex surface having the approximately the same curvature as that of the concave surface. According to this, an external light beam reaches the eye of the user without being greatly deflected at the reflection unit 6. Accordingly, the user can visually recognize an external image with less distortion.

In addition, the reflection unit 6 may include a diffraction grating. In this case, if the diffraction grating has various optical characteristics, it is possible to reduce the number of components of an optical system, or it is possible to increase the degree of freedom in design. For example, when using a hologram diffraction grating as the diffraction grating, it is possible to adjust an emission direction of a signal light beam that is reflected from the reflection unit 6, or it is possible to select a wavelength of the signal light beam that is reflected. In addition, when the diffraction grating has a lens effect, it is possible to adjust an imaging state of the entirety of scanning light beams composed of signal light beams which are reflected from the reflection unit 6, or it is possible to correct an aberration during reflection of the signal light beams from the concave surface.

In this embodiment, since the modulators 30R, 30G, and 30B are used as an external modulator, a wavelength variation, which occurs during a flickering operation of a light source, is reduced. Accordingly, a diffraction angle variation at the diffraction grating is suppressed, and thus it is possible to provide an image with less image haziness. As the hologram diffraction grating, a stereo diffraction grating that is formed in an organic material due to optical interference, or a diffraction grating in which unevenness is formed on a surface of a resin material by a stamper can be used.

As the reflection unit 6, for example, a unit in which a transflective film constituted by a metal thin film or a dielectric multi-layer film is formed on a transparent substrate, or a polarization beam splitter may be used. In a case of using the polarization beam splitter, it is possible to employ a configuration in which a signal light beam transmitted from the optical scanning unit 42 becomes a polarized light beam, and a polarized light beam corresponding to the signal light beam transmitted from the optical scanning unit 42 is reflected.

### Second Embodiment

Next, description will be given of a second embodiment of the image display apparatus according to the invention.

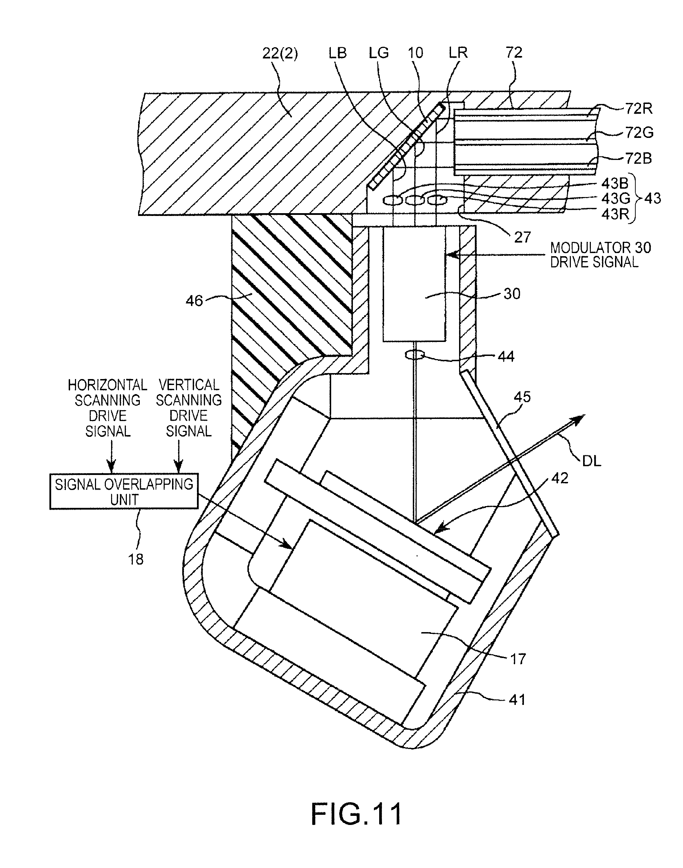

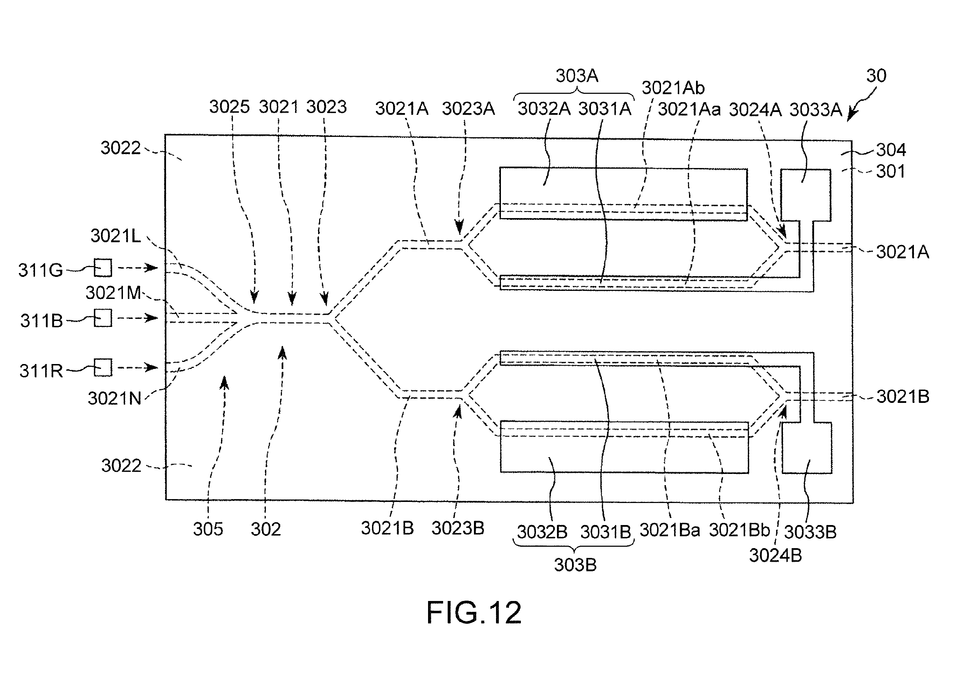

Fig. 11 is a view illustrating a schematic configuration of an optical scanning unit that is included in an image display apparatus according to the second embodiment, and Fig. 12 is a plan view of a modulator illustrated in Fig. 11.

Hereinafter, the second embodiment will be described, but in the following description, description will be made with focus given to a difference from the first embodiment, and description of the same configurations will not be repeated. In the drawings, the same reference numerals will be given to the same components as in the above-described embodiment.

The image display apparatus according to the second embodiment is substantially the same as the image display apparatus according to the first embodiment except for a configuration in which intensity modulation of the three light beams (the red light beam LR, the green light beam LG, and the blue light beam LB) can be conducted with one modulator 30.

That is, the image display apparatus according to the first embodiment includes the modulator 30R corresponding to the red light beam LR, the modulator 30G corresponding to the green light beam LG, and the modulator 30B corresponding to the blue light beam LB. In contrast, as illustrated in Fig. 11, the image display apparatus according to this embodiment includes only one modulator 30.

As illustrated in Fig. 12, in the modulator 30 according to this embodiment, an optical waveguide 302 includes three incident ends. That is, in addition to the waveguide pattern similar to the first embodiment, the optical waveguide 302 further includes three core portions 3021L, 3021M, and 3021N which extend from the three incident ends, and a joining portion 3025 at which the three core portions 3021L, 3021M, and 3021N are joined to each other. A multiplexing unit 305, which multiplexes three colors of signal light beams, is constituted by the core portions 3021L, 3021M, and 3021N, and the joining portion 3025.

In addition, the above-described multiplexing unit 305 is provided, and thus the red light beam LR, the green light beam LG, and the blue light beam LB are multiplexed, and a multiplexed light beam is generated. When this multiplexed light beams are incident to a modulator structure that is the same as the modulator according to the first embodiment, individual intensity modulation can be conducted in a time-division manner for each of the light beams with wavelengths different from each other. According to this, even when a multi-color display (for example, full-color display) is possible, it is possible to realize simplification of a structure of the modulator 30, and it is possible to realize a reduction in size of the image display apparatus.

That is, in this embodiment, the red light beam LR, the green light beam LG, and the blue light beam LB, which are emitted from three light sources 311R, 311G, and 311B, are multiplexed, and the resultant multiplexed light beam is incident to one modulator 30, and thus it is difficult to conduct intensity modulation for each color of the signal light beams as is. Accordingly, the light source 311R, the light source 311G, and the light source 311B are driven at timings different from each other (in an exclusive manner on the time axis). In the modulator 30, the red light beam LR that is emitted from the light source 311R, the green light beam LG that is emitted from the light source 311G, and the blue light beam LB that is emitted from the light source 311B are modulated in an exclusive manner on the time axis, that is, in a time-division manner. According to this, it is possible to individually modulate the intensity of three light beams with wavelengths different from each other in one modulator 30.

In addition, according to this embodiment, the multiplexing unit 305 is embedded in the modulator 30, and thus the light synthesizing unit 47 according to the first embodiment is not necessary, and thus it is possible to reduce the number of lenses 44. According to this, it is possible to reduce the number of components of the image display apparatus, and thus it is possible to realize simplification of a structure and a reduction in the cost.

In addition, in this embodiment, the red light beam LR, the green light beam LG, and the blue light beam LB are multiplexed at the joining portion 3025 that is a part of the optical waveguide pattern, and thus it is possible to further suppress an optical loss in accordance with the multiplexing and a deviation in the optical loss for each of the light beams with wavelengths different from each other in comparison to other multiplexing units. According to this, it is possible to suppress a deviation in a color of an image that is displayed.

According to the above-described configuration, external modulation of the three colors of signal light beams can be conducted by the one modulator 30. That is, it is possible to independently conduct the external modulation with respect to the plurality of colors of signal light beams by using a modulator in a number less than the number of the light sources. According to this, even in a particularly simple structure, the same operation and effect as those in the first embodiment are obtained.

In addition, it is possible to omit the light synthesizing unit 47, and it is possible to reduce the number of modulators in comparison to the first embodiment, and thus it is possible to realize an additional reduction in size of the image display apparatus.

In addition, in order to conduct more accurate intensity modulation in the modulator 30, it is preferable that the optical waveguide 302 is a so-called single mode waveguide. Accordingly, when an examination is made of a structure of the optical waveguide 302 in which a single mode can exist with respect to all of the red light beam LR, the green light beam LG, and the blue light beam LB, it is recognized that coexistence of the signal mode is possible when the shape (dimensions) of a cross-section of the core portion 3021 in the optical waveguide 302 is optimized.

Specifically, description will be given in detail of a case where the wavelength of the red light beam LR is 650 nm, the wavelength of the green light beam LG is 520 nm, the wavelength of the blue light beam LB is 445 nm, and the core portion 3021 is formed with the above-described Ti diffusion method.

In a case of forming the core portion 3021 by the Ti diffusion method, a difference in a refractive index between the core portion 3021 and the clad portion 3022 becomes approximately 0.005. Under such an environment, the depth of the core portion 3021 (the thickness of the core portion 3021), with which the red light beam LR can propagate in a single mode, is 0.9 µm to 2.0 µm, the depth of the core portion 3021, with which the green light beam LG can propagate in a single mode is approximately 1.0 µm to 2.4 µm, and the depth of the core portion 3021, with which the blue light beam LB can propagate in a single mode is approximately 1.3 µm to 3.1 µm. Accordingly, the depth of the core portion 3021, with which the red light beam LR, all of the green light beam LG, and the blue light beam LB can exist in a single mode, is obtained as 1.3 µm to 2.0 µm.

In addition, the width of the core portion 3021, with which the red light beam LR can propagate in a single mode is approximately 2.8 µm or less, the width of the core portion 3021, with which the green light beam LG can propagate in a single mode is approximately 3.3 µm or less, and the width of the core portion 3021, with which the blue light beam LB can propagate in a single mode is approximately 4.1 µm or less. Accordingly, the width of the core portion 3021, with which all of the red light beam LR, the green light beam LG, and the blue light beam LB can exist in a single mode, is obtained as 2.8 µm or less.

Accordingly, in the above-described example, when the depth of the core portion 3021 is set to 1.3 µm to 2.0 µm, and the width thereof is set to 2.8 µm or less, it is recognized that it is possible to realize the modulator 30 provided with the core portion 3021 in which all of the red light beam LR, the green light beam LG, and the blue light beam LB can exist in a single mode.

In addition, in the above-described calculation example, the depth and the width of the core portion 3021 are obtained by calculating a dispersion curve from the refractive index of the core portion 3021.

### Third Embodiment

Next, description will be given of a third embodiment of the image display apparatus according to the invention.

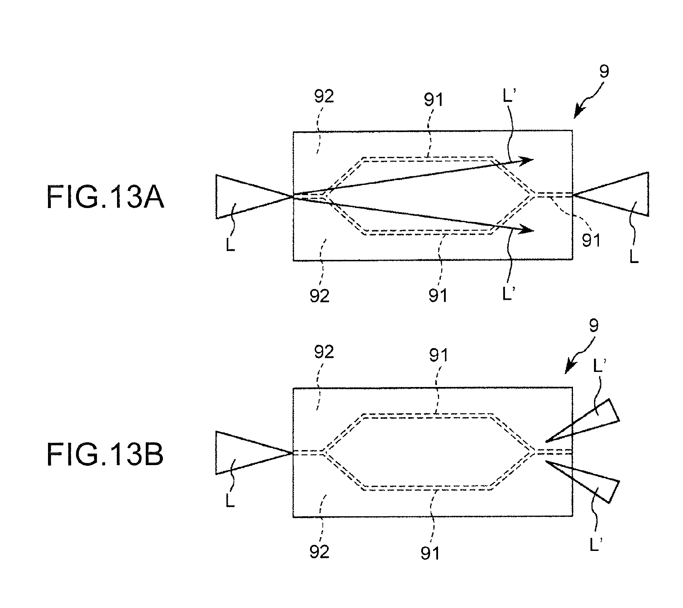

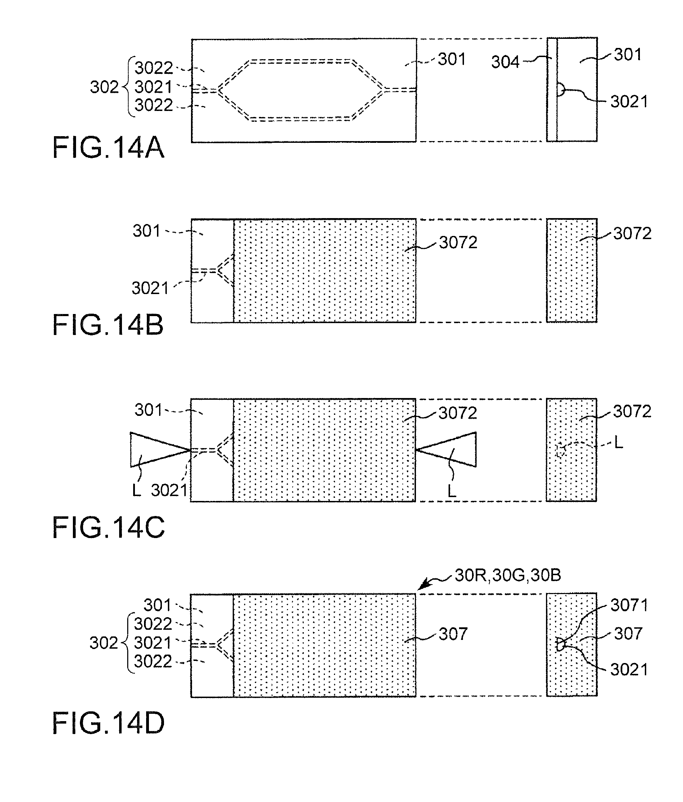

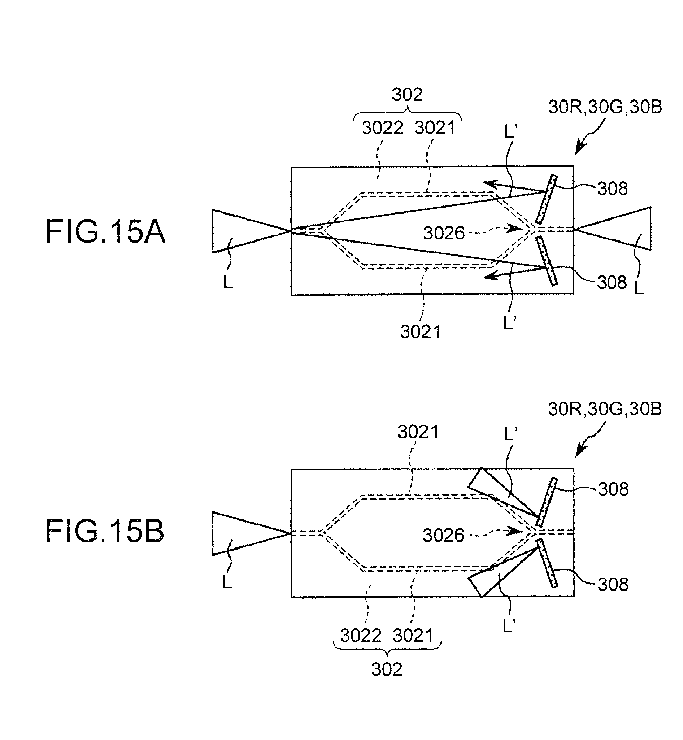

Figs. 13A and 13B are views illustrating a problem in a modulator of the related art, Figs. 14A to 14D, and Figs. 15A and 15B are plan views of a modulator that is included in an image display apparatus according to the third embodiment. In addition, in Figs. 14A to 14D, a front elevation view of an end surface on an emission end side of a light beam is also illustrated in addition to the plan views.

Hereinafter, the third embodiment will be described, but in the following description, description will be made with focus given to a difference from the first embodiment, and description of the same configurations will not be repeated. In the drawings, the same reference numerals will be given to the same components as in the above-described embodiment.

Figs. 13A and 13B are plan views of a Mach-Zehnder type modulator 9 in the related art, and this modulator 9 includes a core portion 91 that is diverged into two parts midway, and a clad portion 92 that is adjacent to the core portion 91 so as to cover a side surface of the core portion 91.

When a signal light beam L is incident from the incident end of the core portion 91, typically, the signal light beam L propagates through the core portion 91, and is emitted from an emission end as illustrated in Fig. 13A. However, in a case were optical axis alignment between a light source (not illustrated) and the incident end of the core portion 91 is not sufficient, there is a concern that a partial signal light beam L is leaked to the clad portion 92, which is adjacent to the core portion 91, instead of being emitted to the core portion 91 (coupling loss). A leakage light beam L' that is leaked propagates through the inside of the modulator 9, and is output in combination with the signal light beam L. As a result, the leakage light beam L' has an adverse effect on an image quality of the image display apparatus that is provided with the modulator 9.

As described above, in the Mach-Zehnder type modulator 9, a refractive index variation based on the electro-optical effect is allowed to occur in one side of the core portion 91 that is diverged into two parts in order for a phase difference to occur at a joining portion of the core portion 91, thereby conducting intensity modulation on the basis of the phase difference.

Accordingly, when the refractive index is changed in order for the phase difference at the joining portion to deviate by a half-wavelength of the signal light beam L, it is possible to make an output from the modulator 9 substantially zero. At this time, as illustrated in Fig. 13B, there is a concern that a partial light beam may be leaked to the clad portion 92 in the vicinity of the joining portion (diffusion mode). A leakage light beam L' that is leaked is output from the modulator 9, and has an adverse effect on an image quality of the image display apparatus that is provided with the modulator 9.

Accordingly, modulators 30R, 30G, and 30B which are illustrated in Figs. 14A to 14D is configured in such a manner that even when the leakage light beam L' is generated, the leakage light beam L' is not output from the modulators 30R, 30G, and 30B.

Specifically, as illustrated in Fig. 14D, the modulators 30R, 30G, and 30B according to this embodiment includes a substrate 301 in which the optical waveguide 302 is formed, and a light-shielding film 307 that covers a part of a surface of the substrate 301. In the modulators 30R, 30G, and 30B, even when the leakage light beam L' occurs at the inside thereof, respectively, the leakage light beam L' is shielded by the light-shielding film 307, and thus output to an outer side is suppressed. As a result, in the image display apparatus provided with the modulators 30R, 30G, and 30B, it is possible to realize the high quality of a display image without being affected by the leakage light beam L'.

In addition, the light-shielding film 307 includes an opening 3071 that is opened at a position corresponding to an emission end surface of the core portion 3021. Accordingly, the signal light beam L that propagates through the core portion 3021 is output without being affected by the light-shielding film 307.

Next, description will be given of a method of manufacturing the modulators 30R, 30G, and 30B according to this embodiment.

First, a substrate 301 in which the optical waveguide 302 is formed is prepared (refer to Fig. 14A).

Next, on the surface of the substrate 301, an application solution 3072 for formation of the light-shielding film 307 is applied to a portion except for the incident end surface of the core portion 3021 (refer to Fig. 14B). At this time, the application solution 3072 for formation of the light-shielding film 307 is applied to cover the emission end surface of the substrate 301. Although not particularly limited, examples of a constituent material of the light-shielding film 307 include a positive type resist material containing a light absorbing pigment, and the like.

Next, the signal light beam L is incident from the incident end surface of the core portion 3021. The incident signal light beam L propagates through the core portion 3021 and is emitted from the emission end surface. At this time, a film of the application solution 3072 for formation of the light-shielding film 307, which covers the emission end surface, is exposed by the signal light beam L (refer to Fig. 14C).

Next, the film of the application solution 3072 for formation of the light-shielding film 307 is subjected to a development treatment. According to this, the film of the application solution 3072 for formation of the light-shielding film 307 at a portion that is exposed is removed, and the above-described opening 3071 is formed. According to the method, the exposure treatment for forming the opening 3071 can be completed only by allowing the signal light beam L to be incident to the core portion 3021, and thus positioning is not necessary during exposure and the exposure treatment can be easily performed. In this manner, it is possible to manufacture the modulators 30R, 30G, and 30B according to this embodiment.

In addition, even when the above-described leakage light beam L' also occurs in the modulators 30R, 30G, and 30B which are illustrated in Figs. 15A and 15B, the leakage light beam L' is not output from the modulator 30R, 30G, and 30B.

Specifically, as illustrated in Figs. 15A and 15B, the modulators 30R, 30G, and 30B according to this embodiment include the substrate 301 in which the optical waveguide 302 is formed, and an optical reflection unit 308 that is embedded in the substrate 301. In the modulators 30R, 30G, and 30B as described above, even when the leakage light beam L' occurs at the inside thereof, the leakage light beam L' is shielded by the optical reflection unit 308, and thus output toward the emission end side is suppressed. As a result, in the image display apparatus that is provided with the modulators 30R, 30G, and 30B, it is possible to realize a high quality of a display image without being affected by the leakage light beam L'.

The light reflection unit 308 according to this embodiment is provided in the vicinity of a joining portion 3026 at which the two diverged core portions 3021 are joined again. In addition, two optical reflection units 308 are disposed to be arranged along the width direction of the core portions 3021 with the joining portion 3026 interposed between the optical reflection units 308.

Each of the optical reflection units 308 has an elongated shape in a plan view, and a long side thereof can be allowed to function as an optical reflective surface. Accordingly, if the major axis of the optical reflection unit 308 is made to be parallel to or slightly inclined to the width direction of the core portion 3021, when the leakage light beam L' due to a coupling loss as illustrated in Fig. 15A, or the leakage light beam L' due to the diffusion mode in the joining portion 3026 as illustrated in Fig. 15B is reflected from the long side of the optical reflection unit 308, it is possible to conduct the reflection in such a manner that the leakage light beam L' is not output to the emission end side.

### Fourth Embodiment

Next, description will be given of a fourth embodiment of the image display apparatus according to the invention.

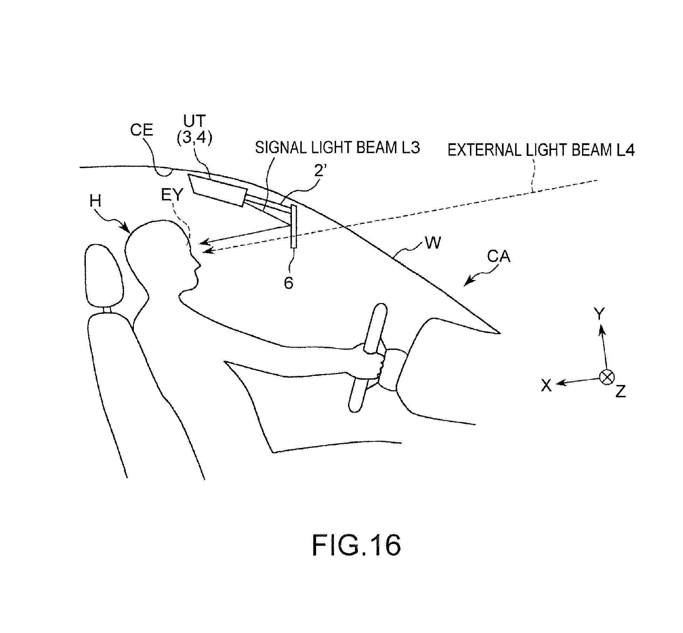

Fig. 16 is a view illustrating the fourth embodiment (head-up display) of the image display apparatus according to the invention.

Hereinafter, the fourth embodiment will be described, but in the following description, description will be made with focus given to a difference from the first to third embodiments, and description of the same configurations will not be repeated. In addition, in the drawings, the same reference numerals will be given to the same components as in the above-described embodiments.

The image display apparatus 1 according to the fourth embodiment is the same as the image display apparatus 1 according to the first to third embodiments except that the image display apparatus 1 according to this embodiment is used in a state of being mounted on the ceiling of an automobile instead of being mounted on the head of the user.

That is, the image display apparatus 1 according to the fourth embodiment is used in a state of being mounted on the ceiling CE of an automobile CA, and allows the user to visually recognize an image that is a virtual image in a state in which the image overlaps with an external image through a front window W of the automobile CA.

As illustrated in Fig. 16, the image display apparatus 1 includes a light source unit UT in which the signal generation unit 3 and the scanning light beam emitting unit 4 are embedded, a reflection unit 6, and a frame 2' that is connected to the light source unit UT and the reflection unit 6.

In addition, in this embodiment, description is given to an example in which the light source unit UT, the frame 2', and the reflection unit 6 are mounted to the ceiling CE of the automobile CA, but these components may be mounted on a dash board of the automobile CA, and partial components may be fixed to the front window W. In addition, the image display apparatus 1 may be mounted to not only the automobile, but also various mobile bodies such as an aircraft, a ship, construction machinery, heavy equipment, a motorcycle, a bicycle, and a spacecraft.

Hereinafter, respective components of the image display apparatus 1 will be sequentially described in detail.

The light source unit UT may be fixed to the ceiling CE by an arbitrary method. For example, the optical source unit UT is fixed by a method of mounting the light source unit UT to a sun visor using a band, a clip, and the like.

For example, the frame 2' includes a pair of elongated members, and both ends of the light source unit UT and the reflection unit 6 in the Z-axis direction are connected to each other by the frame 2', thereby fixing the light source unit UT and the reflection unit 6.

The signal generation unit 3 and the scanning light beam emitting unit 4 are embedded in the light source unit UT, and a signal light beam L3 is emitted from the scanning light beam emitting unit 4 toward the reflection unit 6.

The reflection unit 6 according to this embodiment is also a half-mirror and also has a function of transmitting an external light beam L4 therethrough. That is, the reflection unit 6 has a function of reflecting the signal light beam L3 (video light beam) emitted from the light source unit UT, and of transmitting the external light beam L4 toward the eye EY of the user from the outside of the automobile CA through the front window W during use. According to this, the user can visually recognize a virtual image (image) formed by the signal light beam L3 while visually recognizing an external image. That is, it is possible to realize a see-through type head-up display.

The above-described image display apparatus 1 also includes the signal generation unit 3 according to the first embodiment as described above. According to this, even in a simple structure, the same operation and effect as those in the first embodiment are obtained. That is, it is possible to obtain the image display apparatus 1 with high definition.

Hereinbefore the image display apparatus according to the invention have been described on the basis of the embodiments illustrated in the drawings, but the invention is not limited to the embodiments.

In the image display apparatus according to the invention, the configuration of the respective components may be substituted with an arbitrary configuration capable of exhibiting the same function, and an arbitrary configuration may be added.

In addition, the reflection unit may be provided with a flat reflective surface.

In addition, embodiments of the image display apparatus according to the invention are not limited to the above-described heat-mounted display or the head-up display, and are applicable to any type as long as the type has a retina scanning type display principle.

## Claims

1. An image display apparatus, comprising:
a light source unit that is arranged to emit a light beam;
a modulator that is arranged to modulate the intensity of the light beam that is emitted from the light source unit; and
an optical scanner that is arranged to conduct spatial scanning with the light beam that is modulated by the modulator,
wherein the modulator includes a distribution unit that is arranged to distribute a light beam that is incident to the modulator into a plurality of light beams, and a modulation unit that is arranged to independently modulate intensity of the light beams which are distributed in the distribution unit.

2. The image display apparatus according to claim 1, wherein the modulator includes a substrate that is constituted by a material having an electro-optical effect, and an electrode that is arranged to apply a voltage to the substrate.

3. The image display apparatus according to claim 2, wherein the material having the electro-optical effect is lithium niobate.

4. The image display apparatus according to claim 2 or 3,
wherein the modulation unit includes an optical waveguide that is formed in the substrate,
the optical waveguide includes,
a diverging portion at which the optical waveguide is diverged into a first optical waveguide and a second optical waveguide, and
a joining portion at which the first optical waveguide and the second optical waveguide are joined to each other, and
a phase difference is allowed to occur between a first light beam that is guided through the first optical waveguide and a second light beam that is guided through the second optical waveguide, and then the first light beam and the second light beam are joined at the joining portion so as to modulate intensity of a light beam that is emitted from the optical waveguide with respect to a light beam that is incident to the optical waveguide.

5. The image display apparatus according to one of the preceding claims,
wherein the light source unit includes a plurality of light sources, and
the modulator is provided in a number that is equal to or greater than the number of the light sources.

6. The image display apparatus according to one of the preceding claims,
wherein the light source unit includes a first light source and a second light source, and
the modulator further includes a multiplexing unit that multiplexes a light beam that is emitted from the first light source, and a light beam that is emitted from the second light source.

7. The image display apparatus according to claim 5, wherein in the light source unit, the first light source and the second light source are arranged to emit light beams at timings different from each other, and
the modulator are arranged to independently modulate intensity of the light beam that is emitted from the first light source and the light beam that is emitted from the second light source.

8. The image display apparatus according to one of the preceding claims, further comprising:
a reflective optical unit that are arranged to reflect the light beam that is used for scanning by the optical scanner,
wherein the reflective optical unit includes a hologram diffraction grating.
